**Europäisches Patentamt**

(19) **European Patent Office**

**Office européen des brevets**

(11) Numéro de publication: **0 042 432**

**A1**

(12) **DEMANDE DE BREVET EUROPEEN**

publiée en application de l'article 158, paragraphe 3 de la CBE

(21) Numéro de dépôt: **80900129.0**

(22) Date de dépôt: **21.12.79**

Données relatives à la demande internationale prise pour base:

(86) Numéro de dépôt international:
**PCT/JP79/00320**

(87) Numéro de publication internationale:
**WO81/01879 (09.07.81 81/16)**

(51) Int. Cl.³: **G 01 F 1/86**
**F 02 D 5/02**

(43) Date de publication de la demande:
**30.12.81 Bulletin 81/52**

(84) Etats contractants désignés:
**FR**

(71) Demandeur: **NTN TOYO BEARING COMPANY, LIMITED**
**3-17, Kyomachibori 1-chome Nishi-ku**
**Osaka-shi Osaka 550(JP)**

(72) Inventeur: **KIMATA, Kei**
**1618, Oaza Hachisuka Miwacho**
**Ama-gun, Aichi 490-12(JP)**

(72) Inventeur: **YOSHIDA, Isamu**
**161-107, Toshincho**
**Iwata-shi Shizuoka 438(JP)**

(74) Mandataire: **BERT, Emmanuel**
**Cabinet Bert, de Keravenant & Herrburger 115,**
**Boulevard Haussmann**
**F-75008 Paris(FR)**

(54) **DETECTEUR DE DEBIT MASSIQUE D'UN GAZ ET SYSTEME D'INJECTION DE COMBUSTIBLE UTILISANT CE DETECTEUR POUR DES MOTEURS A COMBUSTION INTERNE.**

(57) Un détecteur de débit massique d'un gaz pour mesur le débit massique d'un gaz s'écoulant dans un passage exerce une force d'actionnement d'une soupape en équilibre avec une force produite par la pression différentielle entre l'extrémité avant et l'extrémité arrière d'un élément de soupape disposé dans le passage de gaz, la force s'exerçant sur l'élément de soupape, de manière à maintenir la pression différentielle constante pour que la zone d'ouverture de l'élément de soupape soit proportionnelle à la vitesse d'écoulement du gaz en vue de détecter la zone d'ouverture pour la mesure de la vitesse d'écoulement du gaz. La force d'actionnement de la soupape susmentionnée est appliquée de manière hydraulique. Le détecteur comprend un élément de correction de variation de la densité du liquide hydrauli- que. Avec cet élément de correction la zone d'ouverture de l'élément de soupape devient proportionnelle au débit massique du gaz. Ce détecteur est utilisé pour mesurer l'air dans un système d'injection de combustible.

./...

Fig. 2

L'invention concerne un dispositif de détection du débit de masse d'un gaz et s'applique à un dispositif de mesure d'air destiné à être utilisé dans un système d'injection pour moteurs à combustion interne.

Dans les moteurs à combustion interne pour automobiles etc... il est particulièrement important, du point de vue du rendement du moteur et du contrôle de pollution des gaz d'échappement, de mesurer avec une grande précision le rapport de masses entre l'air et le carburant admis dans le moteur, de manière à maintenir ce rapport à la valeur voulue. Il faut pour cela utiliser un dispositif de mesure de masse d'air débitée présentant une précision élevée.

Un type connu d'un tel dispositif de mesure comprend un élément de soupape s'ajoutant au volet des gaz classique pour déterminer la quantité d'air aspirée, cet élément de soupape, placé dans un tube d'aspiration, étant réglé, par un mécanisme de servo-commande, de manière à produire une différence de pression constante de part et d'autre de ce même élément de soupape, de façon que sa surface d'ouverture soit proportionnelle au débit d'air qui la traverse, le degré d'ouverture de cet élément de soupape servant ainsi de mesure du débit d'air.

Le mécanisme de servo-commande constitue une boucle de contre-réaction comprenant un mécanisme d'amplification sensible à la pression, détectant toute variation de différence de pression de part et d'autre de l'élément de soupape, à partir d'une valeur prédéterminée, pour produire une pression de fonctionnement amplifiée dépendant de l'écart de pression, et un bloc de commande de soupape recevant la pression de fonctionnement de manière à régler l'élément de soupape pour que l'écart de la différence de pression de part et d'autre de l'élément de soupape, à partir de la valeur prédéterminée, puisse être ramené à zéro.

Ce dispositif classique utilise un élément de compensation monté dans le servo-mécanisme pour compenser les variations de densité d'air dues aux variations de température et de pression de cet air. Ainsi ce dispositif classique est capable de mesurer le débit de masse d'air quelles que soient les variations de température et de pression. Un tel réglage de l'élément de soupape est automatiquement suivi par le réglage du bloc de mesure de carburant associé. Il en résulte que le rapport entre les masses d'air et de carburant est maintenu constant.

Cependant le dispositif connu utilisant le servo-mécanisme décrit ci-dessus présente l'inconvénient d'être de construction très compliquée. De plus, pour obtenir un contrôle fiable et stable du fonctionnement du dispositif, il faut pouvoir disposer de réglages précis qui peuvent à leur tour demander parfois des techniques spéciales.

L'invention a donc pour principal but de créer un dispositif capable de détecter avec précision le débit d'une masse de gaz, ce dispositif étant de construction simple.

A cet effet l'invention concerne un dispositif de détection du débit de masse d'un gaz, dispositif caractérisé en ce qu'un élément de soupape est placé dans un passage par lequel circule le gaz et en ce que cet élément de soupape est soumis à une force de manoeuvre juste suffisante pour équilibrer une force agissant sur l'élément de soupape par suite d'une différence de pression de part et d'autre de l'élément de soupape, de manière à maintenir ainsi cette différence de pression à une valeur constante pour que la surface d'ouverture de l'élément de soupape puisse être proportionnelle au débit de gaz, la surface ou le degré d'ouverture de l'élément de soupape étant détecté comme valeur de mesure du débit de gaz, la force de manoeuvre de la soupape étant fournie par une pression hydraulique, un élément de compensation réglant cette pression hydraulique à partir de la densité du gaz de façon que la surface d'ouverture de l'élément de soupape puisse être proportionnelle au débit de masse de gaz, la pression hydraulique étant contrôlée par un régulateur de pression, ce régulateur de pression comportant deux chambres séparées l'une de l'autre par un diaphragme sensible à la pression, l'une de ces chambres étant soumise à la pression hydraulique tandis que l'autre chambre laisse pénétrer le gaz présent dans le passage et contient un ressort monté en parallèle de manière à déterminer l'amplitude de la pression hydraulique, et un soufflet rempli d'une masse donnée d'un gaz donné, ce soufflet constituant l'élément de compensation.

L'élément de compensation peut comporter un élément de chauffage placé à l'intérieur ou autour du soufflet. On peut ainsi, en réglant l'intensité du courant à appliquer à l'élément de chauffage, faire varier la pression de gaz dans le soufflet de manière à obtenir une mesure du débit de gaz indiquant une valeur plus grande ou plus petite que la valeur réelle. Cela présente de grands avantages, en particulier dans le cas d'un dispositif de mesure d'air utilisé dans un système d'injection de carburant pour moteurs à combustion interne.

Ces caractéristiques, ainsi que d'autres buts et avantages de l'invention apparaîtront plus clairement à la lecture de la description détaillée qui suit et qui se réfère aux dessins ci-joints dans lesquels :

- la figure 1 est une vue explicative représentant un détecteur de débit de gaz correspondant à une forme préférée de réalisation de l'invention, et

- la figure 2 est une vue explicative représentant un système d'injection de carburant pour moteurs à combustion interne utilisant un détecteur de débit de gaz selon l'invention.

Sur tous les dessins les parties identiques ou analogues sont repérées par les mêmes références.

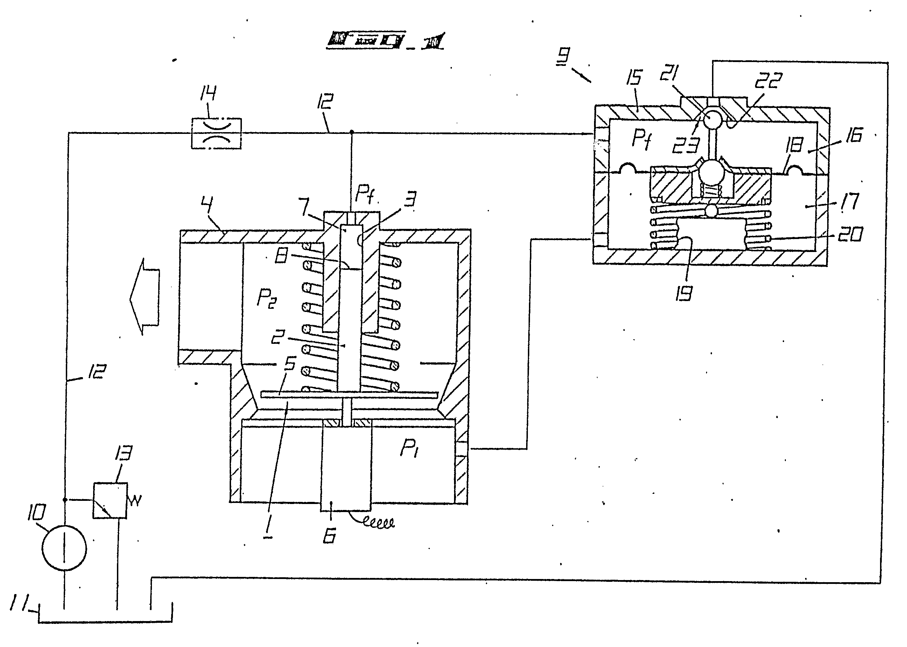

En se référant tout d'abord à la figure 1, le schéma d'ensemble d'un détecteur de débit de gaz selon l'invention comprend d'une part un détecteur de débit de gaz, repéré d'une façon générale par la référence 1, comprenant un plongeur 2 pouvant glisser de manière étanche aux fluides dans un alésage cylindrique 3 percé dans un passage de gaz 4, et un élément de soupape 5 fixé à une extrémité du plongeur, et d'autre part un générateur de signal 6 détectant le déplacement du détecteur de débit de gaz 1 et produisant un signal électrique correspondant.

Pour le générateur de signal on utilise par exemple un potentiomètre ou un transformateur différentiel comme élément de conversion déplacement-tension permettant de transformer le déplacement du détecteur de débit de gaz 1 en un signal électrique. Ce détecteur de débit de gaz est basé sur le principe d'un système de mesure de type à surface variable à différence de pression constante.

Une pression hydraulique pf règne dans une chambre de pression 7 formée dans l'alésage cylindrique 3 par une surface d'extrémité 8 du plongeur 2 à l'opposé de l'élément de soupape 5. Si la pression hydraulique pf est maintenue constante par un régulateur de pression repéré d'une façon générale par la référence 9, la force de manoeuvre de la soupape agissant vers le bas du plongeur 2 soumis à la pression hydraulique pf est également constante, de sorte que la différence de pression $P_1 - P_2 = Pd$ de part et d'autre de l'élément de soupape 5 est constante et prend la valeur de la différence de pression obtenue lorsque la force agissant sur l'élément de soupape 5 est équilibrée par la force constante de manoeuvre de la soupape.

Par suite, comme on peut le voir sur l'équation exprimant le débit de masse de fluide passant à travers un orifice :

$$W = A \sqrt{2 \ g.p. \ Pd}$$

expression dans laquelle :

W = débit de masse de fluide

A = surface de passage effective

g = accélération de la pesanteur

p = densité du fluide

Pd= différence de pression de part et d'autre de l'orifice,

la surface d'ouverture de l'élément de soupape 5 (correspondant à A dans l'équation ci-dessus) est proportionnelle au débit de masse du gaz (correspondant à W dans l'équation ci-dessus) quand la densité ou poids spécifique du gaz (correspondant à p dans l'équation ci-dessus) est constante. Ainsi le déplacement du détecteur de débit 1 peut être utilisé comme une mesure du débit de gaz, ce déplacement étant transformé en un signal électrique par le générateur 6.

Le liquide qui sert d'agent de pression hydraulique fournissant la force de manoeuvre de la soupape, est aspiré dans un réservoir 11 par une pompe 10 et amené sous pression par un conduit 12. La pression du liquide dans le conduit 12 est maintenue constante par une soupape de sécurité 13.

Le conduit 12 communique avec la chambre de pression 7 par l'intermédiaire d'un étranglement fixe 14. Cette pression dans la chambre de pression 7 est commandée par le régulateur de pression 9.

L'intérieur du boîtier 15 du régulateur de pression 9 est divisé par un diaphragme sensible à la pression 18, de manière à former une première chambre 16 communicant avec la chambre de pression 7, et une seconde chambre 17 communicant avec le passage de gaz 4 en amont du détecteur de gaz 1. Il suffit simplement de laisser pénétrer dans la seconde chambre 17 le gaz arrivant par le passage 4. Ainsi, sans se limiter à l'exemple illustré ici, on peut brancher la chambre 17 au passage de gaz en aval du détecteur de débit de gaz 1, ou encore dans le cas où l'on mesure de l'air, la laisser déboucher directement dans l'atmosphère.

Dans la seconde chambre 17 sont montés en parallèle un soufflet 19 et un ressort 20 destinés à équilibrer exactement la force due à la pression hydraulique pf dans la première chambre 16 et agissant sur la surface supérieure du diaphragme 18. Sur le diaphragme 18 est montée une soupape à bille 21 coopérant avec la surface conique d'un siège de soupape 22 formé dans la paroi supérieure du boîtier 15 pour constituer un étranglement variable 25 conduisant au réservoir 11.

Ainsi, si la pression hydraulique pf s'écarte d'une référence prédéterminée, la relation d'équilibre entre les forces des divers éléments n'est plus respectée et il faut alors faire varier le degré d'ouverture de l'étranglement variable 23. En réponse à ce nouveau réglage la quantité de liquide revenant en arrière vers le réservoir 11 augmente ou diminue jusqu'à ce que la pression hydraulique pf dans la première chambre 16 et, par suite, dans la chambre de pression 7 reprenne sa valeur de référence. A ce propos la référence prédéterminée indiquée ci-dessus est déterminée par les forces élastiques du soufflet 19 et du ressort 20.

Le soufflet 19 est rempli d'une masse donnée d'un gaz donné et la force élastique du soufflet 19 varie avec la température et la pression du gaz ambiant entourant le soufflet c'est-à-dire du gaz présent dans le passage 4, pour corriger ainsi la valeur de référence. Ainsi la pression hydraulique pf et par conséquent la différence de pression de part et d'autre de l'élément de soupape 5, se trouvent corrigées suivant les variations de densité du gaz dues aux variations de température et de pression, de façon que le produit de la différence de pression Pd par la densité p soit constant à chaque instant.

On constatera ainsi, d'après l'équation donnée ci-dessus, relative au débit d'une masse de fluide, que le déplacement du détecteur de débit de gaz 1 est proportionnel au débit de masse du gaz quelles que soient les variations de densité de celui-ci. Cela représente la fonction de compensation des variations de densité assurée par le soufflet 19.

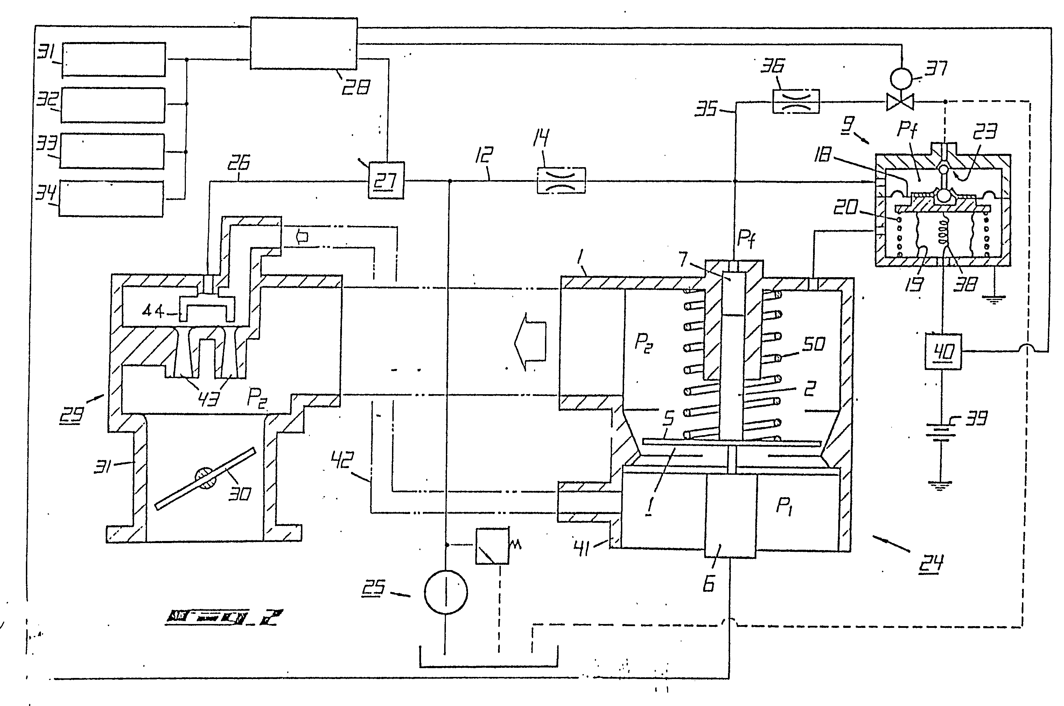

La figure 2 représente un système d'injection de carburant pour moteurs à combustion interne, dans lequel un dispositif de mesure d'air selon l'invention est repéré d'une façon générale par la référence 24. Comme indiqué sur cette figure le système d'injection de carburant comprend le dispositif de mesure d'air 24 qui, comme décrit ci-dessus, détecte le débit d'air traversant un passage d'air constitué dans ce cas par un tuyau d'aspiration 1, pour fournir un signal électrique correspondant; un dispositif d'alimentation de carburant 25 fournissant le carburant sous pression à une conduite principale d'alimentation de carburant 26 ; et un dispositif de mesure de carburant 27, de type à commande électrique, contrôlé par un bloc de commande électronique 28 en réponse à un signal provenant du dispositif de mesure d'air 24, de manière à fournir une quantité de carburant proportionnelle au débit d'air.

Le système d'injection de carburant comprend en outre un dispositif de vaporisation de carburant 29 recevant le carburant mesuré par le dispositif de mesure 27, délivrant ce carburant au tuyau d'aspiration et vaporisant celui-ci pour le mélanger à l'air. Ce système d'injection de carburant est du type dans lequel le réglage du dispositif de mesure de carburant suit le réglage du dispositif de mesure d'air pour détecter le débit d'air traversant le tuyau d'aspiration, par suite, le rapport air-carburant du mélange de gaz admis dans le cylindre du moteur est maintenu constant. De plus le débit d'air, et par conséquent de mélange gazeux admis dans le cylindre (non représenté) est déterminé par un volet des gaz classique 30 placé dans une partie 31 du tuyau d'aspiration.

On décrira maintenant en détail les dispositifs élémentaires indiqués ci-dessus. Le dispositif de mesure d'air 24 est exactement le même que le dispositif de mesure de gaz précédemment décrit sur la figure 1 et il n'est donc pas nécessaire de reprendre sa description ici.

Dans la forme de réalisation de la figure 2 le carburant sert d'agent de transmission de la pression hydraulique pf dans la chambre de pression 7. Le carburant sous pression sortant du dispositif d'alimentation de carburant 25 passe à travers une conduite d'alimentation de carburant principale 26 séparée par un conduit 12 placé en amont d'un étranglement fixe 14, vers le dispositif de mesure de carburant 27.

Le dispositif de mesure de carburant est de type à commande électrique, par une soupape à solénoïde par exemple dont le rapport de marche/arrêt est commandé par des signaux électriques, ou par un orifice variable dont le degré d'ouverture est commandé par ces signaux électriques. Le dispositif de mesure de carburant 27 commande la quantité de carburant fournie au moteur en utilisant les signaux électriques issus du bloc de commande électronique 28. Ce bloc de commande électronique 28 reçoit un signal électrique correspondant au débit de masse d'air, ce signal provenant d'un générateur de signal du détecteur de débit de gaz constitué dans le cas présent par le détecteur de débit d'air 1 et faisant mesurer au dispositif de mesure de carburant 27 une quantité de carburant correspondante.

De plus le bloc de commande électronique 28 reçoit des signaux électriques représentant les divers paramètres de fonctionnement du moteur à savoir : un signal venant d'un détecteur de température 31 indiquant la température de l'eau de refroidissement du moteur ; un signal venant d'un détecteur d'admission des gaz 32 associé au volet des gaz 30, ce signal indiquant le degré d'ouverture du volet des gaz 30 ; un signal venant d'un détecteur $\lambda$ 33 indiquant la relation entre le rapport air-carburant actuel et le rapport air-carburant théorique ; un signal indiquant la pression d'admission dans la tubulure d'admission, ce signal étant détecté par un détecteur de pression d'admission 34 ; et ainsi de suite.

Ainsi la quantité de carburant à mesurer par le dispositif de mesure de carburant 27 se règle en fonction des différents signaux électriques représentant les conditions de fonctionnement correspondantes du moteur, et en particulier du signal électrique indiquant le débit de masse d'air après le dispositif de mesure 24.

On utilise un conduit 35 court-circuitant l'étranglement variable 23 du régulateur de pression 9 et comprenant un étranglement fixe 36 et une soupape à solénoïde 37, lorsqu'on désire modifier temporairement la pression hydraulique pf de la chambre de pression 7. Plus particulièrement, lorsque la

soupape à solénoïde 37 est ouverte, la pression hydraulique pf prend une valeur constante déterminée par les tailles des étranglements fixes 14 et 36 indépendamment de la référence prédéterminée sur le régulateur de pression 9. Cette fonction est utile lorsque, le volet des gaz 30 étant complètement ouvert, on désire augmenter la puissance de sortie du moteur en diminuant la différence de pression de part et d'autre du détecteur de débit d'air 1 et en augmentant la quantité de carburant admise (c'est-à-dire, en d'autres termes, en augmentant la richesse en carburant) du mélange tout en augmentant le rendement en volume.

Dans le soufflet 19 est monté un appareil de chauffage 38 utilisé lorsqu'on désire modifier temporairement la température du gaz dans le soufflet 19 et par conséquent la pression dans celui-ci, pour modifier le rapport air-carburant dans certaines conditions de fonctionnement du moteur. Cet appareil peut être utilisé comme interface de commande de contre-réaction utilisant le détecteur $\lambda$ 33. La quantité de courant qu'une source d'électricité 39 doit fournir à l'appareil de chauffage 38 augmente ou diminue à volonté sous l'effet d'un bloc de commande de courant 40 contrôlé par les signaux électroniques venant du bloc de commande électronique 28.

Le dispositif de vaporisation de carburant 29 branché du côté aval du dispositif de mesure de carburant 27 de la conduite principale d'alimentation de carburant 26, comporte un circuit de dérivation 42 commençant dans la partie de tuyau d'aspiration 41 en amont du détecteur de débit d'air 1 et se terminant dans une buse d'air 43, au moins, débouchant dans une partie de tuyau d'aspiration 31 située en aval du détecteur d'air 1 et en amont du volet des gaz 30, et une buse de carburant 44, au moins, alignée avec les buses d'air 43 et destinée à recevoir le carburant venant du dispositif de mesure de carburant 27. La différence de pression Pd = $P_1$ - $P_2$ de part et d'autre du détecteur de débit d'air 1 induit un courant d'air dans la dérivation 42 de manière à produire un débit d'air à grande vitesse dans les buses d'air 43. Ainsi le carburant sortant de la buse de carburant 44 passe dans le débit d'air à grande vitesse produit dans les buses d'air, ce qui permet d'obtenir une vaporisation satisfaisante du carburant.

L'avantage présenté par l'utilisation du dispositif de vaporisation de carburant 29 est caractérisé par

9.-

0042432

le dispositif de mesure de carburant 27, et sortant par la buse de carburant 44 dans le débit d'air à grande vitesse des buses d'air 43 (qui dans la présente forme de réalisation se présentent sous la forme d'un Venturi), permet d'obtenir une vaporisation parfaitement satisfaisante du carburant et par conséquant un fonctionnement très doux du moteur, ce qui améliore ainsi la souplesse de fonctionnement et la réduction de consommation de carburant.

Selon l'invention, l'utilisation du dispositif de mesure de carburant à commande électrique 27 permet de monter le dispositif de mesure d'air 24 et le dispositif de mesure de carburant 27 séparément l'un de l'autre ; cela est très utile en particulier lorsque ces dispositifs doivent être montés sur une automobile où la place disponible d'installation est très limitée.

De plus, sur les dessins, le dispositif de mesure de carburant 27 est représenté séparé du dispositif de vaporisation de carburant 29, mais ces deux dispositifs peuvent ne former qu'une seule pièce.

On explicitera maintenant, pour mieux les expliquer, les relations de dimensions et de pression entre les différents éléments, permettant d'obtenir la correction convenable de la différence de pression $Pd = P_1 - P_2$ pour compenser toute variation de densité d'air.

Si l'on suppose qu'une pression $P_1 - \gamma \cdot Pd$ agit sur la surface inférieure du diaphragme 18 du régulateur de pression 9, $\gamma$ représentant le poids spécifique du gaz, ce poids spécifique étant équivalent à la densité p utilisée dans l'équation donnée plus haut pour exprimer le débit de fluide.

La condition pour que la pression hydraulique fournissant la force de manoeuvre de la soupape soit proportionnelle à la masse de gaz débitée est alors :
$$\gamma \cdot Pd = constante.$$
Si les variations de $\gamma$ sont petites on peut utiliser l'équation suivante :
$$\Delta (\gamma \cdot Pd) = Pd_0 \cdot \Delta \gamma + \gamma_0 \, \Delta Pd = 0 \qquad (1)$$
dans laquelle l'indice "o" désigne la condition de référence qu'on pourra également utiliser ci-après.

En ce qui concerne le gaz contenu dans le passage, on peut tirer de la loi de Boyle-Charls, c'est-à-dire

de la loi $\gamma = \dfrac{\varphi}{R.T}$ , l'expression :

$$\frac{\Delta\gamma}{\gamma_o} = \frac{\Delta P_1}{P_o} - \frac{\Delta T_1}{T_o} \qquad (2)$$

La pression Pb et la température Tb du gaz dans le soufflet deviennent respectivement $P_o$ et $T_o$ lorsque le gaz ambiant c'est-à-dire le gaz contenu dans le passage, se trouve à la température de référence prédéterminée $T_o$. Cependant, quand la température varie de $\Delta$ Tb, la pression varie de $\Delta$ Pb. Dans les conditions stables, comme les variations de volume du soufflet 18 sont négligeables, Pb/Tb = constante, et par conséquent :

$$\frac{\Delta Pb}{Pb_o} - \frac{\Delta Tb}{Tb_o} = o \qquad (3)$$

La relation d'équilibre des forces agissant sur l'élément de soupape 5 du détecteur de débit de gaz 1 est représentée par l'équation suivante :

$$(P_1 - P_2)\ Sa = (Pf - P_1)\ Sf_1 + Fs1$$

$$\Delta Pd.\ Sa = (\Delta Pf - \Delta P1)\ Sf1 \qquad (4)$$

De plus la relation d'équilibre des forces agissant sur le diaphragme 18 du régulateur de pression 9 est représentée par les équations suivantes :

$$Pf.\ Sf2 = Pb.\ Sb + (Sf2 + Sb)(P1 - \gamma.\ Pd) + Fs2$$

$$\Delta Pf.\ Sf2 = \Delta Pb.\ Sb + (Sf2 + Sb)(\Delta P1 - \gamma\Delta Pd) \qquad (5)$$

$$\Delta Pf.\ Sf2 = \Delta Pb.\ Sb + S2\ \Delta P1 - Sb\ \Delta P1 - (Sf2 - Sb)\ \gamma\Delta Pd$$

dans lesquelles :

    Sf1 = surface effective de sensibilité à la pression du plongeur 2 ;

    Sf2 = surface effective de sensibilité à la pression du diaphragme 18 ;

    Sa  = surface effective de sensibilité à la pression de l'élément de soupape 5 ;

    Sb  = surface effective de sensibilité à la pression du soufflet 19 ;

    FS1 = force du ressort 50 ;

    FS2 = force du ressort 20.

Par suite,

$$(\Delta Pf - \Delta P1)\ Sf2 = (\Delta Pb - \Delta P1)\ Sb - (Sf2 - Sb).$$

Par substitution de l'équation (4) on obtient :

$$\frac{Sf1}{Sf2}\ Sa\ \Delta Pd = (\Delta Pb - \Delta P1)Sb - (Sf2 - Sb)\ \gamma.\Delta Pd \qquad (6)$$

En faisant $T1 = Tb$ et $Pb_o = To$ dans les équations (1), (2) et (3), on obtient :

$$- \frac{\Delta Pd}{Pd_o} = \frac{\Delta P1}{P_o} - \frac{\Delta T1}{T_o} = \frac{\Delta P1}{P_o} - \frac{\Delta Pb}{P_o}$$

c'est-à-dire :

$$\frac{1}{P_o} ( \Delta Pb - \Delta P1) = \frac{\Delta Pd}{Pd_o} \qquad (7)$$

La substitution de l'équation (7) dans l'équation (6) donne :

$$\frac{Sf2}{Sf_1} \cdot Sa \cdot \Delta Pd = \frac{Po}{Pd_o} \Delta Pd \cdot Sb - (Sf2 - Sb) \gamma \Delta Pd$$

$$\frac{Sf2}{Sf1} \cdot \frac{Sa}{Sb} = \frac{Po}{Pd_o} - (\frac{Sf2}{Sf1} - 1) \cdot \gamma$$

Par suite :

$$\frac{Po}{Pd_o} = \frac{Sf2}{Sf1} \cdot \frac{Sa}{Sb} - ( \frac{Sf2}{Sb} - 1) \gamma \qquad (8)$$

Quand $\gamma = o$, c'est-à-dire quand P1 agit sur la surface inférieure du diaphragme 17,

$$\frac{Po}{Pd_o} = \frac{Sf2}{Sf1} \cdot \frac{Sa}{Sb} \cdot$$

REVENDICATIONS

1.- Dispositif de détection du débit de masse d'un gaz, dispositif caractérisé en ce qu'un élément de soupape est placé dans un passage par lequel circule le gaz et en ce que cet élément de soupape est soumis à une force de manoeuvre juste suffisante pour équilibrer une force agissant sur l'élément de soupape par suite d'une différence de pression de part et d'autre de l'élément de soupape, de manière à maintenir ainsi cette différence de pression à une valeur constante pour que la surface d'ouverture de l'élément de soupape puisse être proportionnelle au débit de gaz, la surface ou le degré d'ouverture de l'élément de soupape étant détecté comme valeur de mesure du débit de gaz, la force de manoeuvre de la soupape étant fournie par une pression hydraulique, un élément de compensation réglant cette pression hydraulique à partir de la densité du gaz de façon que la surface d'ouverture de l'élément de soupape puisse être proportionnelle au débit de masse de gaz, la pression hydraulique étant contrôlée par un régulateur de pression, ce régulateur de pression comportant deux chambres séparées l'une de l'autre par un diaphragme sensible à la pression, l'une de ces chambres étant soumise à la pression hydraulique tandis que l'autre chambre laisse pénétrer le gaz présent dans le passage et contient un ressort monté en parallèle de manière à déterminer l'amplitude de la pression hydraulique, et un soufflet rempli d'une masse donnée d'un gaz donné, ce soufflet constituant l'élément de compensation.

2.- Dispositif selon la revendication 1, caractérisé en ce que l'élément de soupape comprend un corps de soupape perpendiculaire au débit de gaz et un plongeur portant le corps de soupape à une extrémité, de manière à permettte à celui-ci de glisser dans la direction du débit de gaz, l'autre surface d'extrémité du plongeur étant soumise à la pression hydraulique fournissant la force de manoeuvre de la soupape, la relation entre la surface et la pression des divers éléments étant représentée par l'équation suivante :

$$\frac{Po}{Pd_o} = \frac{Sf2}{Sf1} \cdot \frac{Sa}{Sb} + \left( \frac{Sf2}{Sb} - 1 \right) \gamma$$

3.- Dispositif selon l'une quelconque des revendications 1 ou 2, caractérisé en ce que l'élément de compensation comprend un élément de chauffage placé à l'intérieur ou autour du soufflet, grâce à quoi la pression de gaz dans ce soufflet varie lorsqu'on augmente ou diminue la quantité de courant appliquée à l'élément de chauffage.

4.- Système d'injection de carburant pour moteurs à combustion interne comprenant un dispositif de mesure d'air comprenant lui-même un détecteur d'air monté dans un tuyau d'aspiration et soumis à une force de manoeuvre produite par une pression hydraulique juste suffisante pour équilibrer une force produite par une différence de pression de part et d'autre du détecteur d'air, un régulateur de pression destiné à maintenir cette différence de pression à une valeur constante en maintenant constante, à une valeur de référence prédéterminée, la force agissant sur le détecteur d'air, de façon que le déplacement de ce détecteur d'air soit proportionnel au débit de l'air d'aspiration, un générateur de signal produisant un signal électrique correspondant au déplacement du détecteur d'air, et un élément de compensation de densité destiné à corriger la valeur de référence appliquée au régulateur de pression suivant la température et la pression de l'air d'aspiration de façon que le déplacement du détecteur d'air soit proportionnel au débit de masse d'air aspirée ; un dispositif d'alimentation de carburant destiné à fournir du carburant sous pression à une conduite d'alimentation de carburant ; un dispositif de mesure de carburant branché à la conduite d'alimentation de carburant et destiné à être contrôlé par un bloc de commande électronique suivant les signaux provenant du générateur de signal du dispositif de mesure d'air, de manière à mesurer une quantité de carburant proportionnelle au débit d'air ; et un dispositif de vaporisation de carburant comprenant une dérivation commençant du côté amont du détecteur d'air dans le tuyau d'aspiration, et se terminant dans la dernière buse d'air débouchant dans le tuyau d'aspiration juste en amont d'une soupape des gaz, et au moins une buse de carburant montée en amont et dans l'alignement de la buse d'air et destinée à débiter dans le tuyau d'aspiration, par l'intermédiaire de la buse d'air, le carburant mesuré par le dispositif de mesure de carburant.

Fig. 1

# INTERNATIONAL SEARCH REPORT

0042432

International Application No   PCT/JP79/00320

## I. CLASSIFICATION OF SUBJECT MATTER (if several classification symbols apply, indicate all) 3

According to International Patent Classification (IPC) or to both National Classification and IPC

Int. Cl.$^3$   G01F1/86
F02D5/02

## II. FIELDS SEARCHED

| Minimum Documentation Searched 4 | |
|---|---|
| Classification System | Classification Symbols |
| IPC | G01F1/76 - 1/90, F02D5/02, F02M69/00 |

| Documentation Searched other than Minimum Documentation to the Extent that such Documents are Included in the Fields Searched 5 | |
|---|---|
| Jitsuyo Shinan Koho | 1945 - 1979 |
| Kokai Jitsuyo Shinan Koho | 1971 - 1979 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| A | JP, B1, 31-3585, 1956-5-17 Bendix Aviation Corp. | 1 - 4 |
| A | JP, A, 50-57265, 1975-5-19 Hitachi, Ltd. | 1 - 4 |
| A | JP, A, 50-57266, 1975-5-19 Hitachi, Ltd. | 1 - 4 |
| A | JP, A, 47-9357, 1972-5-15 Robert Bosch | 4 |
| A | JP, B1, 40-28961, 1965-12-23 Robert Bosch | 4 |

\* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search 2 | Date of Mailing of this International Search Report 2 |
|---|---|
| March 25, 1980 (25.03.80) | April 7, 1980 (07.04.80) |
| International Searching Authority 1 | Signature of Authorized Officer 20 |
| Japanese Patent Office | |

Form PCT/ISA/210 (second sheet) (October 1977)

FURTHER INFORMATION CONTINUED FROM THE SECOND SHEET

**V. ☐ OBSERVATIONS WHERE CERTAIN CLAIMS WERE FOUND UNSEARCHABLE [10]**

This international search report has not been established in respect of certain claims under Article 17(2) (a) for the following reasons:

1. ☐ Claim numbers _____, because they relate to subject matter [12] not required to be searched by this Authority, namely:

2. ☐ Claim numbers _____, because they relate to parts of the international application that do not comply with the prescribed requirements to such an extent that no meaningful international search can be carried out [13], specifically:

**VI. ☒ OBSERVATIONS WHERE UNITY OF INVENTION IS LACKING [11]**

This International Searching Authority found multiple inventions in this international application as follows:

This international patent application includes more than two inventions as described below. Claims 1 to 3 relate to a gas mass flow rate detector, and Claim 4 relates to a fuel injection system for an internal combusion engine used as an air measuring device. Accordingly, these two inventions cannot ./.

1. ☒ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:
   ./.

be recognized as a sole invention to form the general concept of the sole invention.

3. ☐ No required additional search fees were timely paid by the applicant. Consequently, this international search report is restricted to the invention first mentioned in the claims; it is covered by claim numbers:

**Remark on Protest**

☐ The additional search fees were accompanied by applicant's protest.

☒ No protest accompanied the payment of additional search fees.

Form PCT/ISA/210 (supplemental sheet (2)) (October 1977)